# FASCICULE DE BREVET EUROPEEN

(11) **EP 1 062 633 B1**
(45) Date de publication et mention de la délivrance du brevet: **17.12.2003**
(21) Numéro de dépôt: 99907717.5
(22) Date de dépôt: 16.03.1999
(51) Int. Cl.: G06K 19/073

(54) **DISPOSITIFS POUR MASQUER LES OPERATIONS EFFECTUEES DANS UNE CARTE A MICROPROCESSEUR**
VORRICHTUNG ZUM MASKIEREN VON BETRIEBSVORGÄNGEN IN EINER MIKROPROZESSORKARTE
DEVICES FOR HIDING OPERATIONS PERFORMED IN A MICROPROCESSOR CARD

(30) Priorité: 20.03.1998 FR 9803471
(43) Date de publication de la demande: 27.12.2000
(73) Titulaire: Gemplus, 13881 Gémenos Cedex (FR)
(72) Inventeur: FEYT, Nathalie, F-13005 Marseille (FR); BENOIT, Olivier, F-13400 Aubagne (FR); NACCACHE, David, F-75009 Paris (FR)
(86) Numéro de dépôt international: FR9900583
(87) Numéro de publication internationale: WO99049416

(56) Documents cités:
- WO-A-96/06504
- US-A- 4 295 041
- US-A- 4 813 024
- US-A- 4 932 053

## Description

L'invention concerne les cartes à microprocesseur et, dans de telles cartes, différents dispositifs pour masquer les opérations effectuées dans la carte dans le but d'améliorer la sécurité contre les intrusions frauduleuses.

Les cartes à puces se divisent en plusieurs catégories, à savoir :
- les cartes à simple mémoire,
- les cartes à mémoire dite carte intelligente, et
- les cartes à microprocesseur.

Une carte à simple mémoire permet d'effectuer des opérations de lecture et d'écriture dans la zone de mémoire morte électriquement effaçable de façon libre. Une telle carte est d'un faible coût mais elle ne présente pas une sécurité suffisante de sorte qu'elle est de moins en moins utilisée.

Une carte à mémoire intelligente améliore notamment la sécurité des opérations de lecture/écriture en les autorisant seulement lorsque certaines conditions réalisées sous forme câblée sont remplies.

Une carte de la troisième catégorie contient un microprocesseur capable d'exécuter des programmes enregistrés dans une mémoire et d'effectuer ainsi des calculs avec des données secrètes inaccessibles au monde extérieur à la carte. Ainsi, une clé enregistrée dans la mémoire peut servir à valider une transaction électronique telle qu'un achat ou une ouverture de porte sans avoir à être manipulée à l'extérieur de la carte.

L'art antérieur connu se résume à trois documents qui sont:
- Document D1 ou brevet US 4 295 041;
- Document D2 ou brevet US 4932 053;
- Document D3 ou brevet US 4 813 024.

Le Document D1 concerne une carte à mémoire comprenant une cellule d'erreur. Lorsqu'un attaquant exécute une opération fausse, l'opération fausse est stockée dans la cellule d'erreur. Ainsi, l'attaquant ne peut pas savoir si l'opération qu'il a effectué est bonne ou pas du fait de l'existence de cette cellule d'erreur. Une consommation de courant différente est obtenue dans le cas d'une attaque informant l'environnement technique qu'il y a eu tentative de fraude.

Le document D2 concerne un dispositif de sécurisation contre la détection non autorisée de données protégées. A chaque opération d'écriture et/ou de lecture, une quantité de courant est consommée. Cette quantité est générée par le circuit de protection qui consomme le courant de manière aléatoire de la même façon que la mémoire. Cette dernière est équivalente à la cellule de simulation du document Dl. La différence avec le document D1 est que la consommation de courant est la même quelque soit l'attaque.

Le document D3 concerné un dispositif d'accès à une mémoire permanente d'un support de données portable, plus schématiquement, il s'agit de cartes à mémoire. Pour s'assurer que le support de données consomme la même quantité de courant lorsqu'une opération demandée est autorisée ou pas, le support comprend des éléments de mémoire nommés "erreur de clé" ou "accès"; un bit est alors stocké dans l'élément de mémoire. Plus précisément, ce document concerne l'utilisation d'une cellule de simulation. Ainsi, il est possible d'écrire plusieurs fois dans une même cellule; lorsqu'un attaquant écrit le bon code, l'écriture se fait dans la vraie cellule; par contre quand il écrit un mauvais code, l'écriture se fait dans la cellule de simulation. L'attaquant ne sait pas distinguer s'il écrit dans la fausse cellule, c'est à dire la cellule de simulation, ou dans la bonne cellule, celle qui permet d'arriver au droit de l'utilsateur. Cette cellule permemt uniquement de masquer la bonne information.

Malheureusement, certains microprocesseurs présentent des consommations de courant qui dépendent des calculs effectués à l'intérieur de la carte. Ainsi; un calcul cryptographique comprenant une arborescence de calcul qui dépend des chiffres de la clé utilisée aura différentes empreintes de consommation de courant selon la valeur de la clé utilisée. Il en resulte qu'un fraudeur pourrait corréler l'empreinte de consommation de courant de la clé utilisée et ainsi remonter à la valeur de la clé.
Pour empêcher cette corrélation, une contre-mesure courante consiste à programmer l'algorithme cryptographique d'une manière telle que quelle que soit la valeur de la clé, l'algorithme passera toujours les mêmes étapes de calcul.

De nombreux algorithmes dits "orientés octets" se prêtent bien à ce mode de programme mais d'autres posent quelques problèmes techniques qui ne sont surmontables qu'au prix de performances calculatoires moins optimales.

La présente invention a donc pour but de mettre en oeuvre dans les cartes à microprocesseur des dispositifs pour masquer les opérations effectuées tout en permettant au programmeur le libre-choix des règles de programmation, qu'elles soient du type "orientées octets" ou non.
Ce but est atteint en modifiant ou brouillant la consommation de la carte de manière que son empreinte soit indépendante des calculs effectués.
Cette modification ou ce brouillage de l'empreinte peut être obtenue en ajoutant dans la carte un dispositif qui modifie la consommation de courant.

Dans un premier exemple de réalisation, ce dispositif consomme de la puissance électrique de manière irrégulière ou aléatoire qui s'ajoute à celle de la consommation normale.

Dans un deuxième exemple de réalisation, ce dispositif réalise une consommation moyenne en réalisant, par exemple, une intégration du courant consommé.

Dans. un troisième exemple de réalisation, ce dispositif déclenche le circuit de programmation ou d'effacement de la mémoire du microprocesseur qui consomme de la puissance de manière chaotique, puissance qui masque la consommation due aux opérations effectuées par le microprocesseur pendant la programmation ou l'effacement de la mémoire.

D'autres caractéristiques et avantages de la présente invention effectueront à la lecture de la description suivante d'exemples particuliers de réalisation, ladite description étant faite en relation avec les dessins joints dans lequels :
- la figure 1 est un schéma fonctionnel d'un premier exemple de réalisation de l'invention,

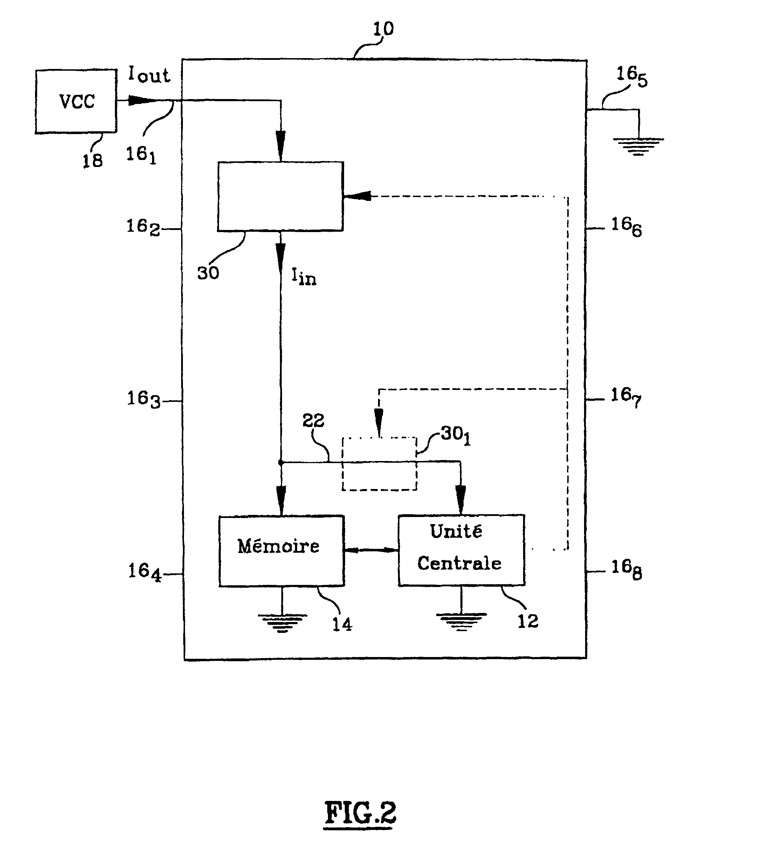

- la figure 2 est un schéma fonctionnel d'un deuxième exemple de réalisation de l'invention, et

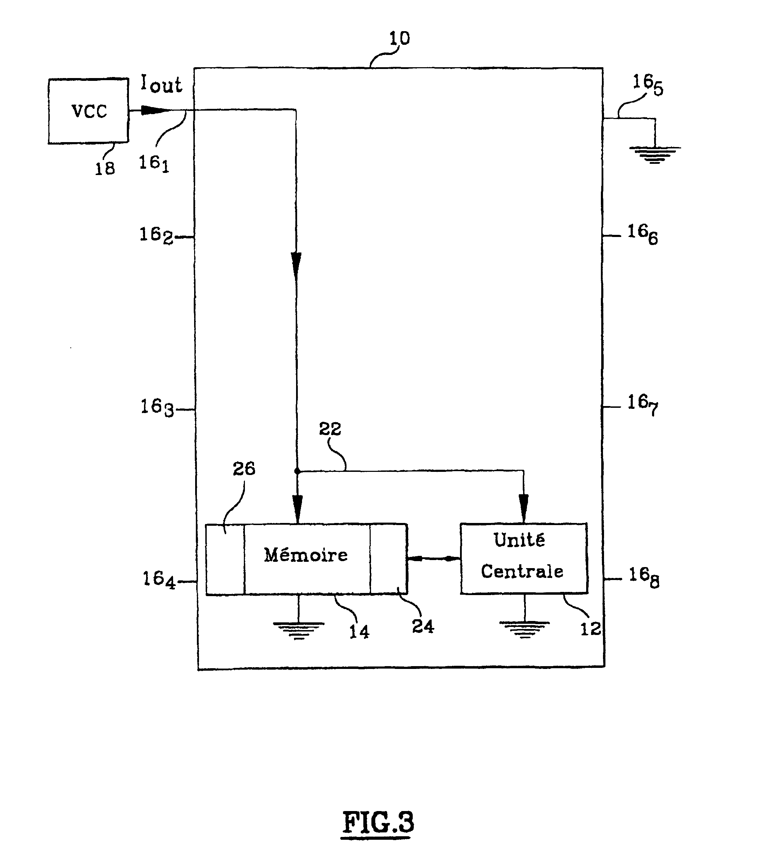

- la figure 3 est un schéma fonctionnel d'un troisième exemple de réalisation de l'invention.

Sur les figures qui montrent chacune schématiquement différents moyens pour réaliser l'invention, la puce électronique 10 contenant le microprocesseur de la carte comprend une unité centrale 12 et au moins une mémoire 14, par exemple du type connu sous l'acronyme anglo-saxon EEPROM FOR ELECTRICALLY ERASABLE PROGRAMMABLE READ ONLY MEMORY. Cette puce électronique présente plusieurs bornes d'entrée et/ou de sortie 16₁ à 16₈ dont l'une d'entre elles référencée 16₁ est connectée à un circuit d'alimentation électrique 18 de tension V_{cc} tandis que celle référencée 16₅ est connectée à la masse.
Le circuit d'alimentation 18 alimente les différents éléments de la puce électronique 10 avec un courant Iₒᵤₜ et, notamment, la mémoire 14 et l'unité centrale 12. Ce courant Iout varie en fonction des opérations effectuées par l'unité centrale et la mémoire et reflètent donc les calculs cryptographiques, ce qui pourrait permettre d'en déterminer la clé.
Pour que ce courant Iₒᵤₜ ne reflète plus les opérations effectuées, l'invention propose de le modifier par un dispositif 20 ou 30, disposé dans la puce 10 et connecté, par exemple, sur la borne d'entrée 16₁.

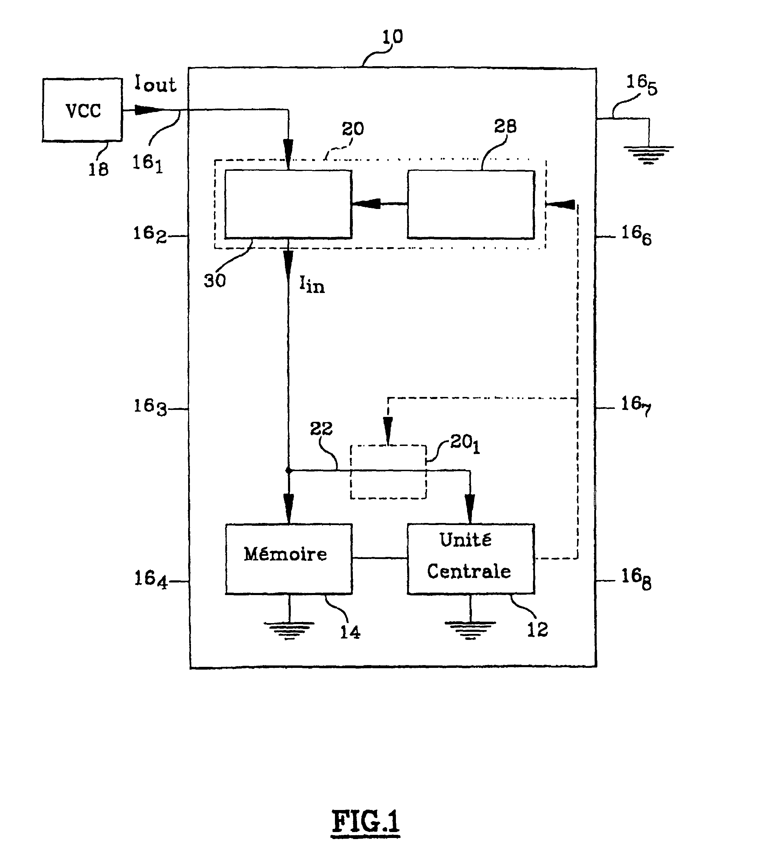

L'invention propose de modifier le courant de deux manières différentes. Une première en faisant en sorte que le dispositif 20 (figure 1) consomme du courant de manière aléatoire ou tout au moins irregulière, consommation supplémentaire aléatoire qui s'ajoutant à la consommation normale de courant Iᵢₙ rend aléatoire la valeur Iₒᵤₜ.

La deuxième manière consiste à moyenner la valeur de Iᵢₙ, ce qui ne permet pas de détecter les variations de Iᵢₙ dues aux opérations effectuées.

Dans le premier cas, le dispositif 20 peut être réalisé à l'aide de résistances 30, en fait des transistors, qui sont alimentées ou non selon les signaux aléatoires fournis par un générateur 28. Les courants circulant dans les résistances alimentées augmentent, modifiant la valeur du courant total et masquant le courant dû aux calculs cryptographiques.

Dans le deuxième cas, la moyenne du courant Iᵢₙ est obtenue par un intégrateur qui "lisse" les variations du courant Iᵢₙ de manière à les effacer.

Selon l'invention, plusieurs dispositifs 20 ou 30, référencés 20₁ et 30₁ peuvent être connectés à différents endroits de la puce électronique, par exemple, sur le conducteur d'alimentation de l'unité centrale (référence 22). En outre, ces dispositifs 20, 20₁, 30 et 30₁ peuvent être connectés ou non selon que les opérations doivent être sécurisées ou non, les connexions s'effectueront sous la commande de signaux fournis par l'unité centrale 12 (traits discontinus).

L'invention propose une troisième manière de brouiller la valeur de Iₒᵤₜ en effectuant des opérations à sécuriser, telles que des calculs cryptographiques, pendant certaines phases des opérations de programmation ou d'effacement de la mémoire 14, ces opérations étant sur la commande de l'unité centrale 12.
Cette troisième manière repose sur l'utilisation d'une mémoire 14 de type EEPROM qui a la capacité d'auto-écriture.

Dans un mode habituel de fonctionnement, le microprocesseur met en marche un circuit de programmation 24 de la mémoire 14 selon les étapes suivantes :
1 - mise en marche de la pompe de charge,
2 - présentation sur le bus de données de la dernière à ecrire,
3 - présentation sur le bus d'adresse de l'adresse écriture,
4 - mise en marche de la programmation,
5- attente d'un délai de programmation,
6 - arrêt de la programmation,
7 - arrêt de la pompe de charge.

La programmation d'une cellule EEPROM nécessitant d'injecter des charges électriques dans la cellule programmée, les étapes 4, 5 et 6 s'accompagnent d'une sur-consommation de courant d'apparence chaotique qui dépend essentiellement de la valeur de V_{cc}, de l'adresse, de la valeur programmée et de la température du composant.

Afin de masquer l'empreinte de consommation de courant d'un calcul cryptographique par exemple, chaotique des étapes 4, 5 et 6 en réalisant le calcul cryptographique pendant l'étape 5 dune durée de quelques millisecondes.
Pour ce faire, le calcul cryptographique s'effectue selon les étapes suivantes :
1 - mise en marche de la pompe de charge,
2 - - présentation sur le bus de données d'une donnée aléatoire,
3 - présentation sur le bus d'adresse d'une adresse écriture,
4 - mise en marche de la programmation,
5 - effectuer le calcul cryptographique,
6 - arrêt de la programmation,
7 - arrêt de la pompe à charge.

Par ces étapes, l'empreinte de la consommation de courant due au calcul cryptographique de l'étape 5 est masquée par l'écriture de la donnée aléatoire dans une partie déterminée 26 de la mémoire EEPROM réservée à cette fonction.

Au lieu d'un calcul cryptographique, l'étape 5 peut consister en toute opération à sécuriser vis-à-vis de l'extérieur.

Par ailleurs, au lieu de faire ces opérations à sécuriser lors d'une écriture dans la mémoire 14, elles peuvent être faites lors d'un effacement de la mémoire 14.

## Revendications

1. Dispositif pour brouiller les opérations effectuées par l'unité centrale d'un composant (10) destiné à être intégré à une carte à puce, **caractérisé en ce qu'**il comprend au moins un moyen (20, 30, 28, 26) pour modifier la consommation de courant dudit composant (10) lors de la réalisation desdites opérations de manière que son empreinte soit indépandante des calculs effectués par l'unite centrale.

2. Dispositif selon la revendication 1, **caractérisé en ce que** le moyen . pour modifier la consommation de courant comprend au moins un circuit intégrateur du courant du composant de manière à moyenner les variations de ce courant au cours du temps.

3. Dispositif selon la revendication 1, **caractérisé** en ce gue le moyen (20) pour modifier la consommation de courant comprend au moins un générateur (28) de signaux aléatoires et une batterie de résistances (20) dont l' alimentation de chacune des résistances est commandée par les signaux aléatoires.

4. Dispositif selon la . revendication 1, **caractérisé en ce qu'**il comprend une pluralité de moyens (20, 20₁, 30, 30₁) pour modifier la consommation de courant.

5. Dispositif selon la revendication 1, **caractérisé en ce que** le moyen pour brouiller la consommation de courant due aux opérations effectuées par le microprocesseur consiste en l'exécution simultanée d'une opération de programmation ou d'effacement de la mémoire (14).

6. Dispositif selon la revendication 5, **caractérisé en ce que**, pour mettre en oeuvre une opération d'écriture de masquage, la mémoire (14) comprend une partie (26) dédiée à l'enregistrement d'une donnée aléatoire.

7. Dispositif selon l'une des revendications 1 à 5, **caractérisé en ce que** la mise en route de chacun des moyens de modification de la consommation de courant est commandée par le microprocesseur (12) de manière à être mis en route pour les seules opérations à sécuriser.

## Patentansprüche

1. Vorrichtung zum Verwirren der von der Zentraleinheit eines Komponenten (10) durchgeführten Operationen, die in eine Chipkarte integriert werden soll, **dadurch gekennzeichnet, dass** sie mindestens ein Mittel (20, 30, 28, 26) umfasst, um den Stromverbrauch des besagten Komponenten (10) bei der Durchführung der besagten Operationen zu ändern, so dass sein Abdruck unabhängig ist von den durch die Zentraleinheit durchgeführten Berechnungen.

2. Vorrichtung nach Anspruch 1, **dadurch gekennzeichnet, dass** das Mittel zum Ändern des Stromverbrauchs mindestens eine Integrationsschaltung des Stroms des Komponenten umfasst, um die Schwankungen dieses Stroms im Verlauf der Zeit zu mitteln.

3. Vorrichtung nach Anspruch 1, **dadurch gekennzeichnet, dass** das Mittel (20) zum Ändern des Stromverbrauchs mindestens einen Generator (28) von Zufallssignalen und eine Widerstandbatterie (20) umfasst, wobei die Versorgung eines jeden Widerstands durch die Zufallssignale gesteuert wird.

4. Vorrichtung nach Anspruch 1, **dadurch gekennzeichnet, dass** sie eine Mehrzahl von Mitteln (20, 20₁, 30, 30₁) zum Ändern des Stromverbrauchs umfasst.

5. Vorrichtung nach Anspruch 1, **dadurch gekennzeichnet, dass** das Mittel zum Verwirren des Stromverbrauchs aufgrund der durch den Mikroprozessor durchgeführten Operationen in der gleichzeitigen Ausführung einer Programmier- oder Löschoperation des Speichers (14) bestehen.

6. Vorrichtung nach Anspruch 5, **dadurch gekennzeichnet, dass** der Speicher (14) zur Umsetzung einer Maskierschreiboperation einen Teil (26) umfasst, der der Aufzeichnung eines Zufallswerts gewidmet ist.

7. Vorrichtung nach einem der Ansprüche 1 bis 5, **dadurch gekennzeichnet, dass** das Einschalten eines jeden Änderungsmittels des Stromverbrauchs von dem Mikroprozessor (12) gesteuert wird, so dass das Einschalten nur für die zu sichernden Operationen erfolgt.

## Claims

1. A device for scrambling the operations performed by the central unit of a component (10) intended to be integrated in a smart card, **characterised in that** it comprises at least one means (20, 30, 28, 26) for modifying the current consumption of the said component (10) during the performance of the said operations so that its imprint is independent of the calculations made by the central unit.

2. A device according to Claim 1, **characterised in that** the means for modifying the current consumption comprises at least one circuit integrating the current of the component so as to average the variations in this current over time.

3. A device according to Claim 1, **characterised in that** the means (20) for modifying the current consumption comprises at least one random signal generator (28) and an array of resistors (20), where the supply to each of the resistors is controlled by the random signals.

4. A device according to Claim 1, **characterised in that** it comprises a plurality of means (20, 20₁, 30, 30₁) for modifying the current consumption.

5. A device according to Claim 1, **characterised in that** the means for scrambling the current consumption due to the operations performed by the microprocessor consist of the simultaneous execution of an operation of programming or erasing the memory (14).

6. A device according to Claim 5, **characterised in that**, in order to implement a masking writing operation, the memory (14) comprises a part (26) dedicated to the recording of a random data item.

7. A device according to one of Claims 1 to 5, **characterised in that** the start-up of each of the means of modifying the current consumption is controlled by the microprocessor (12) so as to be started up solely by the operations to be protected.
